# EUROPEAN PATENT SPECIFICATION

(11) **EP 4 628 382 B1**
(45) Date of publication and mention of the grant of the patent: **28.10.2026**
(21) Application number: 24168758.1
(22) Date of filing: 05.04.2024
(51) Int. Cl.: B60W 50/00

(54) **A SYSTEM AND METHOD FOR CONTROLLING ECO MODE OVERRIDE IN A VEHICLE**
SYSTEM UND VERFAHREN ZUR STEUERUNG DER ÖKOMODUSÜBERSTEUERUNG IN EINEM FAHRZEUG
SYSTÈME ET PROCÉDÉ DE COMMANDE DE LA DÉROGATION AU MODE ÉCO DANS UN VÉHICULE

(43) Date of publication of application: 08.10.2025
(73) Proprietor: VOLVO TRUCK CORPORATION, 405 08 Göteborg (SE)
(72) Inventor: BRUN, Arnaud, 69007 LYON (FR); QUIBRIAC, Yann, 69007 LYON (FR); SEVENIER, Fanette, 69690 COURZIEU (FR)
(74) Representative: Kransell & Wennborg KB

(56) References cited:
- EP-A1- 3 243 719
- EP-A1- 3 825 194
- WO-A1-2018/192800
- JP-A- 2013 109 446

## Description

### TECHNICAL FIELD

The invention relates generally to adapting driving modes of vehicles. In particular aspects, the invention relates to a system and method for controlling ECO mode override in a vehicle. The invention can be applied to heavy-duty vehicles, such as trucks, buses, and construction equipment, among other vehicle types. The invention can further be applied to passenger vehicles such as cars. Although the invention may be described with respect to a particular vehicle, the invention is not restricted to any particular vehicle.

### BACKGROUND

In the automotive technology, fuel efficiency and energy conservation are of high importance. Many modern vehicles are equipped with an "ECO" mode, a feature designed to minimize fuel or electricity consumption by limiting the vehicle's acceleration capabilities and, in some instances, its maximum speed. The ECO mode is beneficial for reducing environmental impact and operational costs, but can compromise vehicle performance, especially in situations where rapid acceleration or increased power is critically needed for safe maneuvering. EP3243719A1 discloses a controller that can activate or deactivate an eco-mode based on user input. EP3825194 discloses a process and system for assisting vehicle operators with safe passing.

### SUMMARY

According to a first aspect of the invention, there is provided a computer system comprising processing circuitry configured to: detect, using sensors of a host vehicle, a high acceleration traffic situation involving a secondary vehicle, estimate a required power to handle the high acceleration traffic situation clear of the secondary vehicle within a timeframe, determine the required power exceeds a current power available in an activated ECO mode of the vehicle, adapt a driving mode of the vehicle from the ECO mode to a higher power mode providing higher propulsion power than in the ECO mode.

The first aspect of the invention may seek to solve the problem of insufficient power in ECO mode when maneuvering the vehicle through critical situations. A technical benefit may include improved safety when maneuvering through critical situations that require more power than what is available in the ECO mode. A further technical advantage is that the driving mode is automatically adapted based on detections of secondary vehicles and estimations of required power in view of currently available power. In other words, the driver does not have to engage in disabling the ECO mode which likely would cause distractions.

Optionally in some examples, including in at least one preferred example, the processing circuitry may be further configured to: acquire navigation data, determine that the host vehicle is at or near a road section that requires the higher power mode, and adapt the driving mode of the vehicle from the ECO mode to the higher power mode prior to reaching the road section. A technical benefit may include that the higher power is already made available prior to reaching a road section as a proactive action. This prevents any delays for adapting the driving mode before the driving situation potentially becomes critical. In other words, the maneuvering safety is further enhanced.

Optionally in some examples, including in at least one preferred example, wherein the road section is determined to require the higher power mode based on prior collected data indicating that the road section has historically required the power mode, or based on road characteristics extractable from the navigational data. Road characteristics may include for example slopes, short insertion lanes, or other characteristics extractable from the navigational data. A technical benefit may include improved decision making by analyzing the road characteristics or historical data.

Optionally in some examples, including in at least one preferred example, the processing circuitry may be further configured to: transmit navigation data that indicates a road section that required adapting to the higher power mode to other vehicles or to a server. A technical benefit may include improved decision-making and thereby maneuvering safety for the vehicles that benefit from the transmitted data. Further, the vehicles receiving the navigation data can proactively prepare for adapting their driving modes.

Optionally in some examples, including in at least one preferred example, the processing circuitry may be further configured to: maintain the higher power mode until the vehicle has handled the high acceleration traffic situation. A technical benefit may include that the driver does not have to manually engage the ECO mode again, thereby providing for less driver distractions and improved fuel efficiency.

Optionally in some examples, including in at least one preferred example, adapting the driving mode from the ECO mode to the higher power mode may include adapting at least one of acceleration limit, speed limit, and gear shifting strategy. A technical benefit may that those adaptions are straight forward and easily accessible and has clear impact of the vehicle's performance.

Optionally in some examples, including in at least one preferred example, the processing circuitry may be further configured to: detect an activation of direction indicator lights, that the host vehicle crosses the lane markings, and a request of increased propulsion torque via an acceleration pedal, while at the same the presence of another secondary vehicle in front of the vehicle and the secondary vehicle in the blind spot are detected using the sensors of the host vehicle, and in response, adapt the driving mode of the vehicle. A technical benefit may include detection of a critical situation where increased power is required. The critical situation is here for overtaking the vehicle in front while a secondary vehicle is present just behind the host vehicle. The overtake can be made safer with more vehicle driving power available.

Optionally in some examples, including in at least one preferred example, the processing circuitry may further be configured to: acquire navigational data, determine, from the navigational data, that the vehicle is on an insertion lane with length lower than a predetermined threshold, detect that the secondary vehicle is in the adjacent lane and behind the host vehicle and closer to the host vehicle than a predetermined proximity threshold, in response, adapt the driving mode of the vehicle. A technical benefit may include detection of a critical situation where increased power is required. The critical situation is here for entry on a road, e.g., a highway, via an insertion lane while a secondary vehicle is already on the road (highway) and relatively near and behind the host vehicle. Thus, for entry on the road from the insertion lane in front of the secondary vehicle, increased available power provides for a safer entry action.

There is further provided a vehicle comprising the computer system.

According to a second aspect of the invention, there is provided a computer-implemented method, comprising: detecting, by a processing circuitry of a computer system, using sensors of a host vehicle, a high acceleration traffic situation involving a secondary vehicle, estimating, by the processing circuitry, a required power to handle the high acceleration traffic situation clear of the secondary vehicle within a timeframe, determining, by the processing circuitry, the required power exceeds a current power available in an activated ECO mode of the vehicle, adapting, by the processing circuitry, a driving mode of the vehicle from the ECO mode to a higher power mode providing higher propulsion power than in the ECO mode.

The second aspect of the invention may seek to solve the problem of insufficient power in ECO mode when maneuvering the vehicle through critical situations. A technical benefit may include improved safety when maneuvering through critical situations that require more power than what is available in the ECO mode. A further technical advantage is that the driving mode is automatically adapted based on detections of secondary vehicles and estimations of required power in view of currently available power. In other words, the driver does not have to engage in disabling the ECO mode which likely would cause distractions.

Optionally in some examples, a road section is determined to require the higher power mode based on prior collected data indicating that the road section has historically required the power mode, or based on road characteristics extractable from the navigational data. Road characteristics may include for example slopes, short insertion lanes, or other characteristics extractable from the navigational data. A technical benefit may include improved decision making by analyzing the road characteristics or historical data.

Optionally in some examples, the method may further comprise: transmitting, by the processing circuitry, navigation data that indicates a road section that required adapting to the power mode to other vehicles or to a server. A technical benefit may include improved decision-making and thereby maneuvering safety for the vehicles that benefit from the transmitted data. Further, the vehicles receiving the navigation data can proactively prepare for adapting their driving modes.

Optionally in some examples, the method may further comprise: maintaining, by the processing circuitry, the higher power mode until the vehicle has handled the high acceleration traffic situation. A technical benefit may include that the driver does not have to manually engage the ECO mode again, thereby providing for less driver distractions and improved fuel efficiency.

Optionally in some examples, wherein adapting the driving mode from the ECO mode to the higher power mode includes adapting at least one of acceleration limit, speed limit, and gear shifting strategy. A technical benefit may be that those adaptions are straight forward and easily accessible and has clear impact of the vehicle's performance.

Optionally in some examples, including in at least one preferred example, the method may further comprise: providing, by the processing circuitry, a message on a user interface in the vehicle that ECO is temporarily deactivated. A technical benefit may include increased driver awareness. Thus, the driver is explicitly informed that the ECO mode is no longer activated, and that more propulsion power is now available. That the driver is aware of that more power is influences the driver behavior during the critical situation to take better and safer decisions.

Optionally in some examples, including in at least one preferred example, the method may further comprise: detecting, by the processing circuitry, an activation of direction indicator lights, that the host vehicle crosses the lane markings, and a request of increased propulsion torque via an acceleration pedal, while at the same the presence of another secondary vehicle in front of the vehicle and the secondary vehicle in the blind spot are detected using the sensors of the host vehicle, and in response, adapting, by the processing circuitry, the driving mode of the vehicle. A technical benefit may include detection of a critical situation where increased power is required. The critical situation is here for overtaking the vehicle in front while a secondary vehicle is present just behind the host vehicle. The overtake can be made safer with more vehicle driving power available.

Optionally in some examples, including in at least one preferred example, the method may further comprise: acquiring, by the processing circuitry, navigational data, determining, by the processing circuitry, from the navigational data, that the vehicle is on an insertion lane with length lower than a predetermined threshold, detecting, by the processing circuitry, that the secondary vehicle is in the adjacent lane and behind the host vehicle and closer to the host vehicle than a predetermined proximity threshold, in response, adapting, by the processing circuitry, the driving mode of the host vehicle. A technical benefit may include detection of a critical situation where increased power is required. The critical situation is here for entry on a road, e.g., a highway, via an insertion lane while a secondary vehicle is already on the road (highway) and relatively near and behind the host vehicle. Thus, for entry on the road from the insertion lane in front of the secondary vehicle, increased available power provides for a safer entry action.

There is further provided a computer program product comprising program code for performing, when executed by a processing circuitry, the method of any example of the second aspect.

There is further provided a non-transitory computer-readable storage medium comprising instructions, which when executed by the processing circuitry, cause a processing circuitry to perform the method of any example of the second aspect.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary system diagram of a computer system for automated adaptation of vehicle driving modes according to an example.
**FIG. 2A** illustrates an example of a high acceleration traffic situation involving secondary vehicles according to an example.
**FIG. 2B** illustrates an example of a high acceleration traffic situation involving a secondary vehicle according to an example.
**FIG. 3** is a flow-chart of a method to adapt a driving mode of a vehicle according to an example.
**FIG. 4** is a flow-chart of method steps to adapt a driving mode of a vehicle according to an example.
**FIG. 5** is a flow-chart of method steps to adapt a driving mode of a vehicle according to an example.
**FIG. 6** is a flow-chart of method steps to adapt a driving mode of a vehicle according to an example.
**FIG. 7** is another view of **FIG. 1****,** according to an example.
**FIG. 8** is a flow chart of a method to adapt a driving mode of a vehicle according to an example.
**FIG. 9** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the invention.

In the automotive technology, fuel efficiency and energy conservation are of high importance. Many modern vehicles are equipped with an "Eco" mode - a feature designed to minimize fuel or electricity consumption by limiting the vehicle's acceleration capabilities and, in some instances, its maximum speed. However, in some driving scenarios, the ECO mode with its reduced power output may cause a safety issue. For example, overtaking a vehicle or entry onto highways on short insertion lanes with insufficient available driving power can lead to a hazardous situation. Examples of the present invention aim to address these issues by an automated adaption of driving modes.

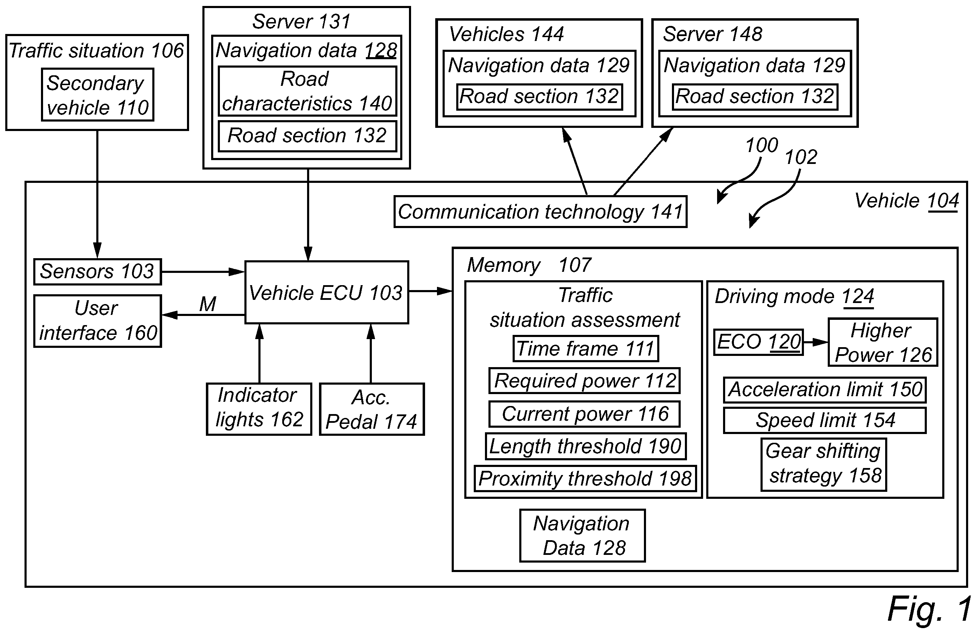

**FIG. 1** is an exemplary system diagram of a computer system 100 for automated adaptation of vehicle driving modes according to an example. The computer system 100 comprises a processing circuitry 102 configured to perform various steps and actions described herein.

Computer system 100 includes processing circuitry 102 which may include a computing device 103 (may also be referred to as an Electronic Computing Unit (ECU) and memory 107 within a vehicle 104. Vehicle 104 includes sensors 103 that are configured to detect the surrounding environment, such as secondary vehicles driving in adjacent lanes or in the same lane as the host vehicle 104. The sensors 103 may include radar devices, cameras, and/or LIDAR.

Sensors 103 are used to detect a high acceleration traffic situation 106 involving a secondary vehicle 110. A high acceleration traffic situation 106 is when the host vehicle 104 benefits, from a safety perspective, in rapid acceleration to handle the high acceleration traffic situation. For example, one or more secondary vehicles 110 may travel at a speed that exceeds the speed of the host vehicle 104 in a traffic situation that requires that the host vehicle travels at a higher speed than the secondary vehicles. In such situation, being one example of a high acceleration traffic situation 106, a rapid increase in acceleration of the host vehicle is needed for the host vehicle to increase its speed to handle the high acceleration traffic situation 106 in a safe way. As a further example, a high acceleration traffic situation 106 may be that the host vehicle 104 requires a speed faster than the secondary vehicle 110, and to achieve this increase within a given timeframe, a rapid acceleration is required.

The ECU 103 estimates a required power 112 to handle the high acceleration traffic situation 106 clear of the secondary vehicle 110 within a timeframe 111. The timeframe 111 is the required time to safely drive through, or handle, or overcome the high acceleration traffic situation 106. The timeframe 111 can be estimated based on measurements, using the sensors 103, and/or secondary vehicle 110 speed relative to the host vehicle 104 speed. Based on the driving action required to handle the high acceleration traffic situation 106, the speed of the secondary vehicles 110, and/or the speed of the host vehicle 104, a timeframe 111 can be estimated. Notably, the timeframe 111 is used for determining the required power 112 to handle the high acceleration traffic situation 106.

In the ECO mode 120, the vehicle 104 has access to a limited amount of current power 116 which limits the acceleration performance of the vehicle 104. In the ECO mode 120, the fuel consumption is prioritized to be kept low. However, the vehicle 104 has access to more than one driving mode 124, such as at least one higher power driving mode 126. The higher power mode 126 provides higher propulsion power than in the ECO mode. Adapting the driving modes, that is shifting between modes includes at least one of adapting an acceleration limit 150, or a speed limit 154, and/or a gear shifting strategy 158 of the host vehicle 104.

The ECU 103 determines that the required power 112 exceeds a current power 116 available in the activated ECO mode 120 of the vehicle 104. That is, more power than what is available in the ECO mode 120, is required to handle the high acceleration traffic situation 106.

The ECU 103 adapts the driving mode 124 of the vehicle 104 from the ECO mode 120 to a higher power mode 126 providing higher propulsion power than in the ECO mode 120.

The ECU 103 can acquire navigation data 128 such as GPS-data or map data. The navigation data 128 provides insights in the present location of the vehicle 104 but also the characteristics 140 of the road section ahead of the vehicle 104. For example, the navigation data 128 can provide valuable information concerning length of a road section, type of road surface, e.g., gravel, asphalt, concrete, etc., width of the road section, whether there are adjacent lanes, curvature of the road section. The navigation data 128 provides information that affect the ability for safe maneuvering of the vehicle 104, especially when handling a high acceleration traffic situation 106.

The ECU 103 is configured to, based on the navigation data 128 received from sever 131 using communication technology 141, determine that the host vehicle 104 is at or near a road section 132 that requires the higher power mode 126. In other words, the ECU 103 compares a present position of the vehicle to the location of the road section 132 and determines that the vehicle 104 is at or is approaching the road section 132. In response to concluding that the host vehicle 104 is at or near a road section 132, the processing circuitry, adapts the driving mode 124 of the vehicle from the ECO mode 120 to the higher power mode 126 prior to reaching the road section 132. That is, in this example, the adaption of the driving mode is proactively performed.

Once an adaption of driving mode 124 is made, the ECU 103 can record navigation data 128 indicating the road section 132 that required the higher power mode 126. In this way, the ECU 103 can build statistics of road sections that historically has required the higher power mode 126. In this example, in response to concluding that the host vehicle 104 is at or near a road section 132 which historically has required the higher power mode 126, the ECU 103 adapts the driving mode 124 of the vehicle from the ECO mode 120 to the higher power mode 126 prior to reaching the road section 132.

The vehicle 104 comprises a wireless communication technology 141, such as Wifi, vehicle-to-vehicle (V2V), vehicle-to-infrastructure (V2I), and/or so-called cellular vehicle-to-everything (V2X). The communication technology 141 is configured to communicate with other vehicles 144 and/or with a server 148. To assist other vehicles 144 in preparing for upcoming road sections 132 that may require adapting their driving modes 124, the ECU 103 of the vehicle 104 can transmit navigation data 129 that indicates the road section 132 that required adapting to the higher power mode to other vehicles 144 or to a server 148. The navigational data 129 may be a subset of the historical data 136, or the entire set of historical data 136 is transmitted to the other vehicles 144 or to the server 148. Transmitting the navigational data to a server 148, that is accessible to the vehicles 144, 104, allows for building a statistical model of where road sections 132 are located that may require driving mode adaption, thereby improving the decision making for adapting the driving mode 124.

The ECU 103 may continuously monitor the surroundings and assess whether or not the high acceleration traffic situation 106 is handled. As long as the high acceleration traffic situation 106 is still present, the ECU 103 maintains the higher power mode 126. However, once the high acceleration traffic situation 106 is handled, the processing circuit 102 again adapts the driving mode 124, but now back to the more fuel/energy efficient ECO mode 120.

The ECU 103 can further adapt the driving mode 124 based on detecting that indicator lights 162 of the host vehicle 104 are activated and/or that a request of increased propulsion torque via an acceleration pedal 174 is made.

The ECU 103 has access to thresholds which are used in some high acceleration traffic situations 106. For example, in case of a high acceleration traffic situation 106 involving the host vehicle traveling on an insertion lane, there is a length threshold 190 below which the insertion lane is considered short.

Furthermore, in high acceleration traffic situation 106 involving a secondary vehicle 110 in an adjacent lane and behind the host vehicle 104, a proximity threshold 198 may be used below which the secondary vehicle is considered close to the host vehicle given that the host vehicle 104 is in a high acceleration traffic situation 106.

The ECU 103 may provide a message M to a user interface 160 in the vehicle 104 that ECO mode 120 is temporarily deactivated. The user interface 160 may for example be a display in the vehicle 104.

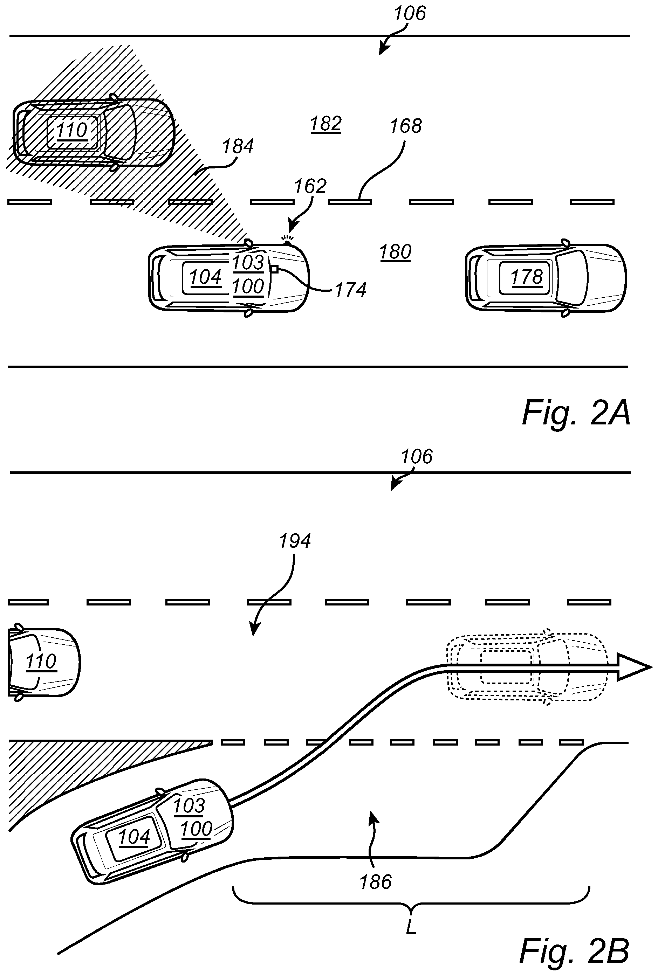

**FIG. 2A** illustrates an example of a specific high acceleration traffic situation 106 involving secondary vehicles 110 and 178. Vehicle 104 is the host vehicle comprising the computer system 100, indicator lights 162, and acceleration pedal 174.

In this traffic situation 106, there is a secondary vehicle 178 in the same lane 180 as and in front of the host vehicle 104, and a secondary vehicle 110 in the blind spot 182 in the adjacent lane 182. The lanes 180 and 182 are separated by lane markings 168.

The host vehicle 104 may initiate an overtake of the secondary vehicle 178 in front. The host vehicle 104 detects that activated indicator lights 162 which indicate that the host vehicle intends to move into the adjacent lane 182. As the host vehicle 104 initiates the overtake, sensors 103 of the host vehicle detect that the host vehicle 104 has crossed or is about to cross lane markings 168. The sensors detect secondary vehicle 178 in front of the host vehicle 104 and in the blind spot 184 of the host vehicle 104, the host vehicle 104 adapts the driving mode 124 of the host vehicle 104 to allow for higher available power to handle the high acceleration traffic situation 106.

**FIG. 2B** illustrates an example of a specific high acceleration traffic situation 106 involving a secondary vehicle 110. In this example, the host vehicle 104 is on, or near, an insertion lane 186 to an adjacent lane 194 for example of a highway.

The host vehicle 104 acquires navigational data 128 used to determine that the host vehicle 104 is in an insertion lane 186 with length L lower than a predetermined threshold 190. In addition, using the sensors 103, the ECU 103 of the host vehicle 104 detects that the secondary vehicle 110 is in the adjacent lane 194 behind the host vehicle 104 and closer to the host vehicle than a predetermined proximity threshold 198. For the host vehicle 104 to safely enter the adjacent lane 194 from this short insertion lane 186 with the secondary vehicle 110 approaching from behind, the host vehicle adapts the driving mode 124 of the host vehicle 104 to allow for higher available power to handle the high acceleration traffic situation 106.

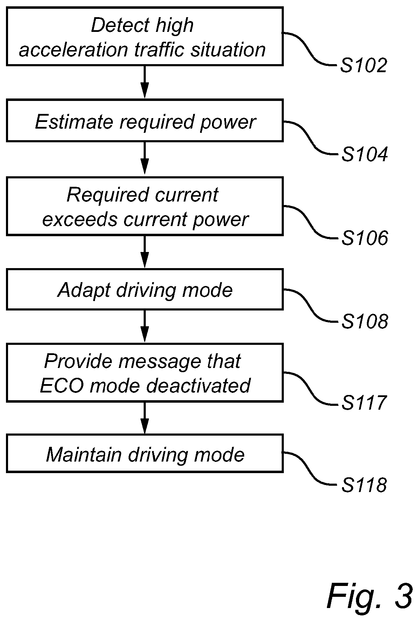

**FIG. 3** is a flow-chart of a method to adapt a driving mode 124 of a vehicle 104 according to an example. In step S102, the host vehicle 104 detects using sensors 103 of a host vehicle 104, a high acceleration traffic situation 106 involving a secondary vehicle 110.

In step S104, the host vehicle 104 estimates a required power 112 to handle the high acceleration traffic situation 106 clear of the secondary vehicle 110 within a timeframe 111.

In step S106, the host vehicle 104 determines the required power 112 exceeds a current power 116 available in an activated ECO mode 120 of the vehicle 104.

In step S108, adapting, by the ECU 103, a driving mode 124 of the vehicle from the ECO mode 120 to a higher power mode 126 providing higher propulsion power than in the ECO mode 120.

In step S118, the ECU 103 sends a message M to a user interface 160 in the vehicle 104 that ECO mode 120 is temporarily deactivated.

When the driving mode 124 is adapted in step S108, the ECU 103 maintains, in step S117 the higher power mode 126 until the host vehicle 104 has handled the high acceleration traffic situation 106. In other words, to allow for the host vehicle 104 to safely manoeuvre the high acceleration traffic situation 106, the higher power mode 126 is activated throughout the high acceleration traffic situation 106, until the ECU 103 determines that the high acceleration traffic situation 106 is handled.

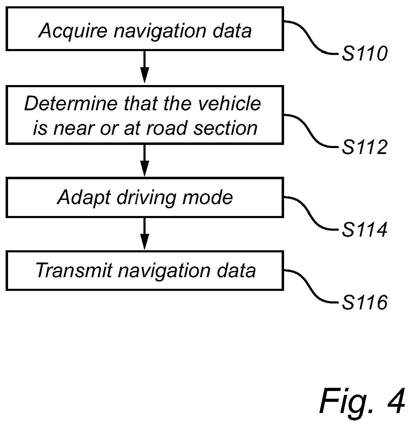

**FIG. 4** is a flow-chart of additional method steps to adapt a driving mode 124 of a host vehicle 104 according to an example. The steps of the method in FIG. 4 may be performed prior to the steps of **FIG 3****,** whereby the steps of **FIG 3** either confirms the high acceleration traffic situation 106 by detecting secondary vehicles 110 or refutes the high acceleration traffic situation 106 whereby the ECO mode 120 is again activated.

In step S110, acquiring, by the ECU 103, navigation data 128 from server 131 using the communication technology 141.

In step S112, determining, by the ECU 103, from the navigation data 128 that the host vehicle 104 is at or near a road section 132 that requires the higher power mode 126.

In step S114 adapting, by the ECU 103, the driving mode 124 of the host vehicle 104 from the ECO mode 120 to the higher power mode 126 prior to reaching the road section 132.

Once at the road section 132, the steps of FIG. 4 can confirm the high acceleration traffic situation 106 by detecting secondary vehicles 110, and maintain the higher power mode 126, or in case there is not a high acceleration traffic situation 106, the ECO mode 120 is again activated.

In step S116, transmitting, by the ECU 103, navigation data 129 that indicates a road section 132 that required adapting to the higher power mode 126 to other vehicles 144 or to a server 148.

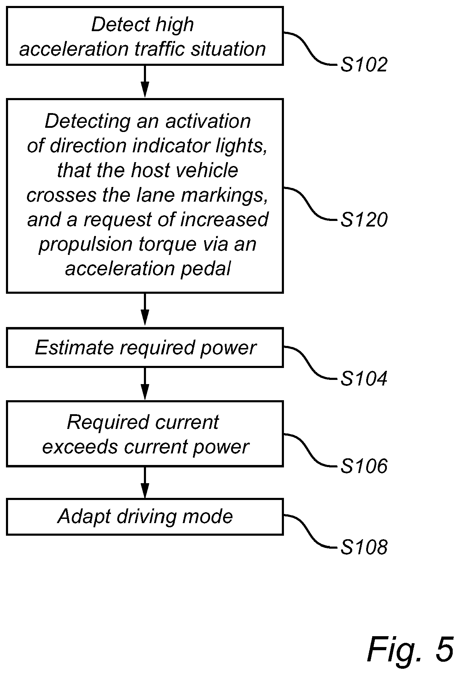

**FIG. 5** is a flow-chart of method steps to adapt a driving mode 124 of a host vehicle 104 according to an example.

In step S102, detecting, by a ECU 103 of a computer system 100, using sensors 103 of a host vehicle 104, a high acceleration traffic situation 104 involving a secondary vehicle 110.

In step S120, detecting, by the ECU 103, an activation of direction indicator lights 162, that the host vehicle 104 crosses the lane markings 168, and a request of increased propulsion torque via an acceleration pedal 174, while at the same time the presence of a secondary vehicle 178 in front of the host vehicle 104 and a secondary vehicle 110 in the blind spot 184 are detected using the sensors 103 of the host vehicle 104.

In step S104, estimating, by the ECU 103, a required power 112 to handle the high acceleration traffic situation 104 clear of the secondary vehicles 110 and 178 within a timeframe 111.

In step S106, determining, by the ECU 103, the required power 112 exceeds a current power 116 available in an activated ECO mode 120 of the host vehicle 104.

In step S108, adapting, by the ECU 103, a driving mode 124 of the host vehicle 104 from the ECO mode 120 to a higher power mode 126 providing higher propulsion power than in the ECO mode 120.

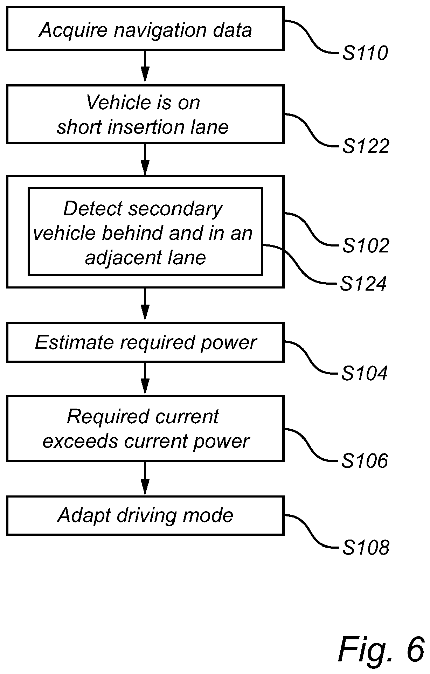

**FIG. 6** is a flow-chart of method steps to adapt a driving mode 124 of a host vehicle 104 according to an example.

In step S110, acquiring, by the ECU 103, navigational data 128.

In step S122, determining, by the ECU 103, from the navigational data 128, that the host vehicle 104 is on an insertion lane 186 with length L, lower than a predetermined length threshold 190. That is, the insertion lane 186 is considered short and rapid acceleration may be required to safely enter the adjacent lane 194.

In step S124 detecting, by the ECU 103, that the secondary vehicle 110 is in the adjacent lane 194 and behind the host vehicle 104 and closer to the host vehicle 104 than a predetermined proximity threshold 198. That is, the secondary vehicle 110 is considered close and rapid acceleration may be required to safely enter the adjacent lane 186. The detection step S124 is a more specific detection, but still part of step S102 which involves detecting secondary vehicles 110. Thus, it may firstly be detected that the host vehicle 104 is on the short insertion lane 186 based on the navigational data 128 in steps S110 and S122. Next detection of the secondary vehicle 110 in steps S124, S102 is performed.

In step S104, estimating, by the ECU 103, a required power to handle the high acceleration traffic situation 106 clear of the secondary vehicle 110 within a timeframe 111.

In step S106, determining, by the ECU 103, the required power 112 exceeds a current power 116 available in an activated ECO mode 120 of the host vehicle 104.

In step S108, in response, adapting, by the ECU 103, the driving mode 124 of the host vehicle 104.

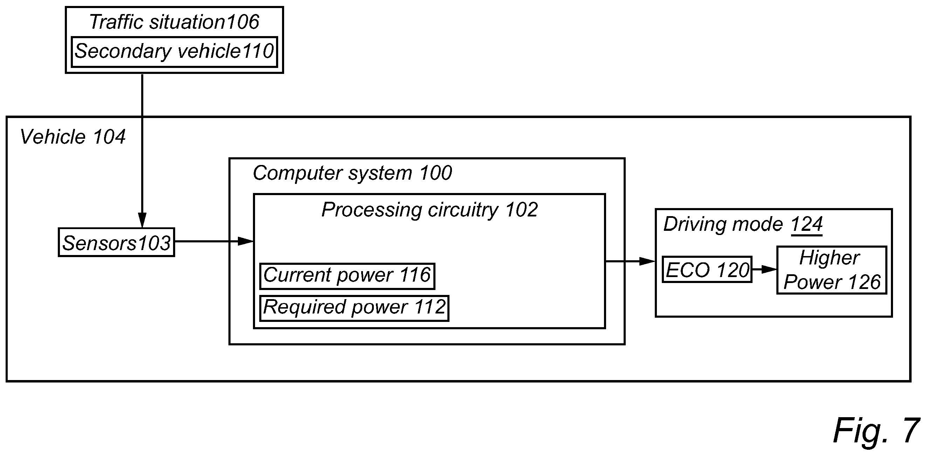

**FIG. 7** is another view of **FIG. 1****,** according to an example. **FIG. 7** is an example system diagram of a computer system 100 comprising processing circuitry 102 configured to: detect, using sensors 103 of a host vehicle 104, a high acceleration traffic situation 106 involving a secondary vehicle 110, estimate a required power 112 to handle the high acceleration traffic situation 106 clear of the secondary vehicle 110 within a timeframe, determine the required power 112 exceeds a current power 116 available in an activated ECO mode 120 of the vehicle, adapt a driving mode 124 of the vehicle from the ECO to a higher power mode 126 providing higher propulsion power than in the ECO mode.

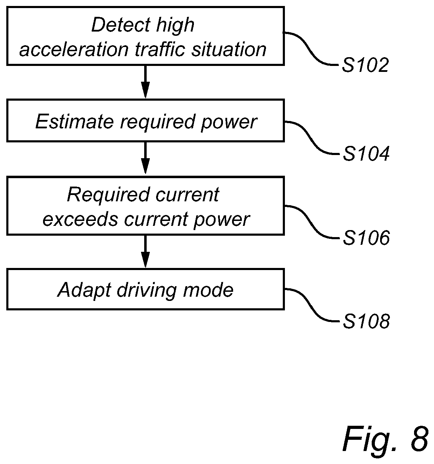

**FIG. 8** is a flow chart of a method to adapt a driving mode of a vehicle according to an example. The method comprises detecting, in step S102, by a processing circuitry of a computer system, using sensors of a host vehicle, a high acceleration traffic situation involving a secondary vehicle, estimating, in step S104, by the processing circuitry, a required power to handle the high acceleration traffic situation clear of the secondary vehicle within a timeframe, determining, in step S106, by the processing circuitry, the required power exceeds a current power available in an activated ECO mode of the vehicle, adapting, in step S108, by the processing circuitry, a driving mode of the vehicle from the ECO mode to a higher power mode providing higher propulsion power than in the ECO mode.

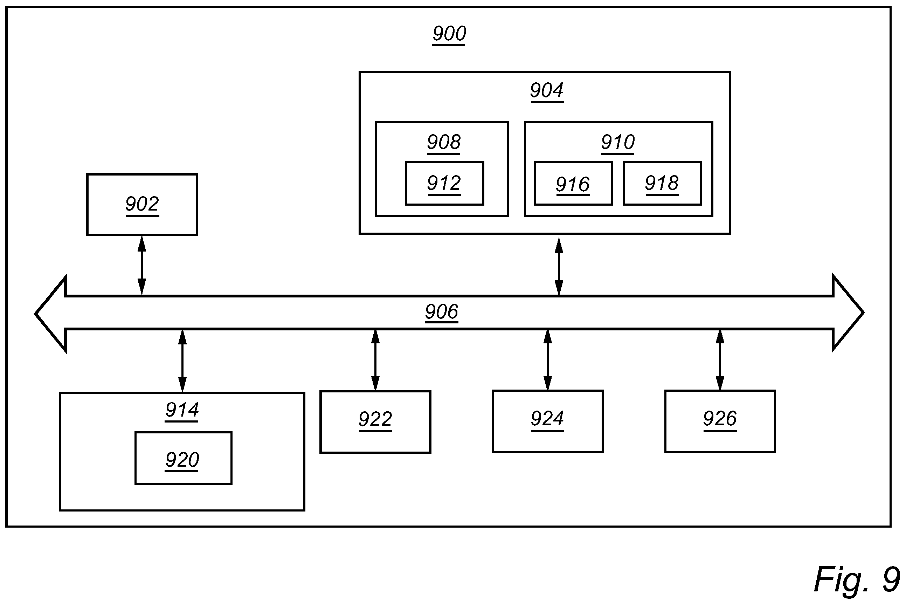

**FIG. 9** is a schematic diagram of a computer system **900** for implementing examples disclosed herein. The computer system **900** is adapted to execute instructions from a computer-readable medium to perform these and/or any of the functions or processing described herein. The computer system **900** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **900** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **900** may comprise at least one computing device or electronic device capable of including firmware, hardware, and/or executing software instructions to implement the functionality described herein. The computer system **900** may include processing circuitry **902** (e.g., processing circuitry including one or more processor devices or control units), a memory **904,** and a system bus **906.** The computer system **900** may include at least one computing device having the processing circuitry **902.** The system bus **906** provides an interface for system components including, but not limited to, the memory **904** and the processing circuitry **902.** The processing circuitry **902** may include any number of hardware components for conducting data or signal processing or for executing computer code stored in memory **904.** The processing circuitry **902** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **902** may further include computer executable code that controls operation of the programmable device.

The system bus **906** may be any of several types of bus structures that may further interconnect to a memory bus (with or without a memory controller), a peripheral bus, and/or a local bus using any of a variety of bus architectures. The memory **904** may be one or more devices for storing data and/or computer code for completing or facilitating methods described herein. The memory **904** may include database components, object code components, script components, or other types of information structure for supporting the various activities herein. Any distributed or local memory device may be utilized with the systems and methods of this description. The memory **904** may be communicably connected to the processing circuitry **902** (e.g., via a circuit or any other wired, wireless, or network connection) and may include computer code for executing one or more processes described herein. The memory **904** may include non-volatile memory **908** (e.g., read-only memory (ROM), erasable programmable read-only memory (EPROM), electrically erasable programmable read-only memory (EEPROM), etc.), and volatile memory **910** (e.g., random-access memory (RAM)), or any other medium which can be used to carry or store desired program code in the form of machine-executable instructions or data structures and which can be accessed by a computer or other machine with processing circuitry **902.** A basic input/output system (BIOS) **912** may be stored in the non-volatile memory **908** and can include the basic routines that help to transfer information between elements within the computer system **900.**

The computer system **900** may further include or be coupled to a non-transitory computer-readable storage medium such as the storage device **914,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **914** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **914** and/or in the volatile memory **910,** which may include an operating system **916** and/or one or more program modules **918.** All or a portion of the examples disclosed herein may be implemented as a computer program **920** stored on a transitory or non-transitory computer-usable or computer-readable storage medium (e.g., single medium or multiple media), such as the storage device **914,** which includes complex programming instructions (e.g., complex computer-readable program code) to cause the processing circuitry **902** to carry out actions described herein. Thus, the computer-readable program code of the computer program **920** can comprise software instructions for implementing the functionality of the examples described herein when executed by the processing circuitry **902.** In some examples, the storage device **914** may be a computer program product (e.g., readable storage medium) storing the computer program **920** thereon, where at least a portion of a computer program **920** may be loadable (e.g., into a processor) for implementing the functionality of the examples described herein when executed by the processing circuitry **902.** The processing circuitry **902** may serve as a controller or control system for the computer system **900** that is to implement the functionality described herein.

The computer system **900** may include an input device interface **922** configured to receive input and selections to be communicated to the computer system **900** when executing instructions, such as from a keyboard, mouse, touch-sensitive surface, etc. Such input devices may be connected to the processing circuitry **902** through the input device interface **922** coupled to the system bus **906** but can be connected through other interfaces, such as a parallel port, an Institute of Electrical and Electronic Engineers (IEEE) 1394 serial port, a Universal Serial Bus (USB) port, an IR interface, and the like. The computer system **900** may include an output device interface **924** configured to forward output, such as to a display, a video display unit (e.g., a liquid crystal display (LCD) or a cathode ray tube (CRT)). The computer system **900** may include a communications interface **926** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present invention.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this invention belongs. It will be further understood that terms used herein should be interpreted as having a meaning consistent with their meaning in the context of this specification and the relevant art and will not be interpreted in an idealized or overly formal sense unless expressly so defined herein.

## Claims

1. A computer system (100) comprising processing circuitry (102) configured to:
detect, using sensors (103) of a host vehicle (104), a high acceleration traffic situation (106) involving a secondary vehicle (110),
estimate a required power (112) to handle the high acceleration traffic situation (106) clear of the secondary vehicle (110) within a timeframe,
determine the required power (112) exceeds a current power (116) available in an activated ECO mode (120) of the vehicle,
adapt a driving mode (124) of the vehicle from the ECO mode (120) to a higher power mode (126) providing higher propulsion power than in the ECO mode.

2. The computer system of claim 1, wherein the processing circuitry is further configured to:
acquire navigation data (128),
determine that the host vehicle (104) is at or near a road section (132) that requires the higher power mode (126), and
adapt the driving mode (124) of the vehicle from the ECO mode to the higher power mode prior to reaching the road section (132).

3. The computer system of claim 2, wherein the road section (132) is determined to require the higher power mode (126) based on prior collected data (136) indicating that the road section (116) has historically required the higher power mode, or based on road characteristics (140) extractable from the navigational data (128).

4. The computer system of any of claims 1-3, wherein the processing circuitry (102) is further configured to:
transmit navigation data (129) that indicates a road section that required adapting to the higher power mode to other vehicles (144) or to a server (148).

5. The computer system of any of claims 1-4, wherein the processing circuitry (128) is further configured to:
maintain the higher power mode (126) until the vehicle has handled the high acceleration traffic situation (106).

6. The computer system of any of claims 1-5, wherein adapting the driving mode from the ECO mode to the higher power mode includes adapting at least one of acceleration limit (150), speed limit (154), and gear shifting strategy (158).

7. The computer system of claim 1, wherein the processing circuitry is further configured to:
detect an activation of direction indicator lights (162), that the host vehicle crosses the lane markings (168), and a request of increased propulsion torque via an acceleration pedal (174), while at the same the presence of another secondary vehicle (178) in front of the vehicle and the secondary vehicle (110) in the blind spot (182) are detected using the sensors of the host vehicle, and
in response, adapt the driving mode (124) of the vehicle.

8. The computer system of claim 1, wherein the processing circuitry is further configured to:
acquire navigational data (128),
determine, from the navigational data, that the vehicle is on an insertion lane (186) with length lower than a predetermined threshold (190),
detect that the secondary vehicle (110) is in the adjacent lane (194) and behind the host vehicle (104) and closer to the host vehicle than a predetermined proximity threshold (198),
in response, adapt the driving mode (124) of the vehicle.

9. A vehicle (104) comprising the computer system (100) of any of claims 1-8.

10. A computer-implemented method, comprising:
detecting (S102), by a processing circuitry (102) of a computer system, using sensors (103) of a host vehicle (104), a high acceleration traffic situation (106) involving a secondary vehicle (110),
estimating (S104), by the processing circuitry, a required power (112) to handle the high acceleration traffic situation (106) clear of the secondary vehicle (110) within a timeframe,
determining (S106), by the processing circuitry, the required power (112) exceeds a current power (116) available in an activated ECO mode (120) of the vehicle,
adapting (S108), by the processing circuitry, a driving mode (124) of the vehicle from the ECO mode (120) to a higher power mode (126) providing higher propulsion power than in the ECO mode.

11. The method of claim 10, further comprising:
providing (S117), by the processing circuitry, a message on a user interface in the vehicle that ECO is temporarily deactivated.

12. The method of claim 10, further comprising:
detecting (S120), by the processing circuitry, an activation of direction indicator lights (162), that the host vehicle crosses the lane markings (168), and a request of increased propulsion torque via an acceleration pedal (174), while at the same the presence of another secondary vehicle (178) in front of the vehicle and the secondary vehicle (110) in the blind spot (182) are detected using the sensors of the host vehicle, and
in response, adapting (S108), by the processing circuitry, the driving mode (124) of the vehicle.

13. The method of claim 10, further comprising:
acquiring (S110), by the processing circuitry, navigational data (128),
determining (S122), by the processing circuitry, from the navigational data, that the vehicle is on an insertion lane (186) with length lower than a predetermined threshold (190),
detecting (S124), by the processing circuitry, that the secondary vehicle (110) is in the adjacent lane (194) and behind the host vehicle (104) and closer to the host vehicle than a predetermined proximity threshold (198),
in response, adapting (S 108), by the processing circuitry, the driving mode of the vehicle.

14. A computer program product (200) comprising program code (202) for performing, when executed by a processing circuitry, the method of any of claims 10-13.

15. A non-transitory computer-readable storage medium (206) comprising instructions (210), which when executed by a processing circuitry, cause the processing circuitry to perform the method of any of claims 10-13.

## Patentansprüche

1. Computersystem (100), das einen Verarbeitungsschaltkreis (102) umfasst, der für Folgendes konfiguriert ist:
Detektieren, unter Verwendung von Sensoren (103) eines Hauptfahrzeugs (104), einer Verkehrssituation mit hoher Beschleunigung (106), an der ein Sekundärfahrzeug (110) beteiligt ist,
Schätzen einer erforderlichen Leistung (112), um die Verkehrssituation mit hoher Beschleunigung (106) ohne das Sekundärfahrzeug (110) innerhalb eines Zeitrahmens zu bewältigen,
Bestimmen, ob die erforderliche Leistung (112) eine aktuelle Leistung (116) übersteigt, die in einem aktivierten Energiesparmodus (120) des Fahrzeugs verfügbar ist,
Anpassen eines Fahrmodus (124) des Fahrzeugs vom Energiesparmodus (120) an einen Modus mit höherer Leistung (126), der eine höhere Antriebsleistung als im Energiesparmodus bereitstellt.

2. Computersystem nach Anspruch 1, wobei der Verarbeitungsschaltkreis ferner für Folgendes konfiguriert ist:
Erfassen von Navigationsdaten (128),
Bestimmen, dass sich das Hauptfahrzeug (104) auf einem Straßenabschnitt (132) oder in der Nähe von diesem befindet, der den Modus mit höherer Leistung (126) erfordert, und
Anpassen des Fahrmodus (124) des Fahrzeugs vom Energiesparmodus an den Modus mit höherer Leistung vor dem Erreichen des Straßenabschnitts (132).

3. Computersystem nach Anspruch 2, wobei basierend auf erfassten Daten (136), die angeben, dass der Straßenabschnitt (116) bisher den Modus mit höherer Leistung erfordert hat, oder basierend auf Straßeneigenschaften (140), die aus den Navigationsdaten (128) extrahiert werden können, bestimmt wird, ob der Straßenabschnitt (132) den Modus mit höherer Leistung (126) erfordert.

4. Computersystem nach einem der Ansprüche 1-3, wobei der Verarbeitungsschaltkreis (102) ferner für Folgendes konfiguriert ist:
Übertragen von Navigationsdaten (129), die einen Straßenabschnitt angeben, der das Anpassen an den Modus mit höherer Leistung erforderte, an andere Fahrzeuge (144) oder an einen Server (148).

5. Computersystem nach einem der Ansprüche 1-4, wobei der Verarbeitungsschaltkreis (128) ferner für Folgendes konfiguriert ist:
Aufrechterhalten des Modus mit höherer Leistung (126), bis das Fahrzeug die Verkehrssituation mit hoher Beschleunigung (106) bewältigt hat.

6. Computersystem nach einem der Ansprüche 1-5, wobei das Anpassen des Fahrmodus vom Energiesparmodus an den Modus mit höherer Leistung das Anpassen mindestens eines von einem Beschleunigungsgrenzwert (150), einem Geschwindigkeitsgrenzwert (154) und einer Schaltstrategie (158) einschließt.

7. Computersystem nach Anspruch 1, wobei der Verarbeitungsschaltkreis ferner für Folgendes konfiguriert ist:
Detektieren einer Aktivierung der Blinkleuchten (162), dass das Hauptfahrzeug die Fahrspurmarkierungen (168) überquert, sowie einer Anforderung eines erhöhten Antriebsdrehmoments über ein Gaspedal (174), während gleichzeitig das Vorhandensein eines weiteren Sekundärfahrzeugs (178) vor dem Fahrzeug und das Sekundärfahrzeug (110) im toten Winkel (182) unter Verwendung der Sensoren des Hauptfahrzeugs detektiert werden, und
als Reaktion darauf, Anpassen des Fahrmodus (124) des Fahrzeugs.

8. Computersystem nach Anspruch 1, wobei der Verarbeitungsschaltkreis ferner für Folgendes konfiguriert ist:
Erfassen von Navigationsdaten (128),
Bestimmen anhand der Navigationsdaten, dass sich das Fahrzeug auf einer Zufahrtsspur (186) mit einer Länge unterhalb eines vorbestimmten Schwellenwerts (190) befindet,
Detektieren, dass sich das Sekundärfahrzeug (110) auf der benachbarten Fahrspur (194) und hinter dem Hauptfahrzeug (104) und näher am Hauptfahrzeug als ein vorbestimmter Annäherungsschwellenwert (198) befindet,
als Reaktion darauf, Anpassen des Fahrmodus (124) des Fahrzeugs.

9. Fahrzeug (104), das das Computersystem (100) nach einem der Ansprüche 1-8 umfasst.

10. Computerimplementiertes Verfahren, das Folgendes umfasst:
Detektieren (S102), durch einen Verarbeitungsschaltkreis (102) eines Computersystems unter Verwendung von Sensoren (103) eines Hauptfahrzeugs (104), einer Verkehrssituation mit hoher Beschleunigung (106), an der ein Sekundärfahrzeug (110) beteiligt ist,
Schätzen (S104), durch den Verarbeitungsschaltkreis, einer erforderlichen Leistung (112), um die Verkehrssituation mit hoher Beschleunigung (106) ohne das Sekundärfahrzeug (110) innerhalb eines Zeitrahmens zu bewältigen,
Bestimmen (S106) durch den Verarbeitungsschaltkreis, ob die erforderliche Leistung (112) eine aktuelle Leistung (116) übersteigt, die in einem aktivierten Energiesparmodus (120) des Fahrzeugs verfügbar ist,
Anpassen (S108), durch den Verarbeitungsschaltkreis, eines Fahrmodus (124) des Fahrzeugs vom Energiesparmodus (120) an einen Modus mit höherer Leistung (126), der eine höhere Antriebsleistung als im Energiesparmodus bereitstellt.

11. Verfahren nach Anspruch 10, das ferner Folgendes umfasst:
Bereitstellen (S117), durch den Verarbeitungsschaltkreis, einer Meldung auf einer Benutzerschnittstelle im Fahrzeug, dass der Energiesparmodus vorübergehend deaktiviert ist.

12. Verfahren nach Anspruch 10, das ferner Folgendes umfasst:
Detektieren (S120), durch den Verarbeitungsschaltkreis, einer Aktivierung der Blinkleuchten (162), dass das Hauptfahrzeug die Fahrspurmarkierungen (168) überquert, sowie einer Anforderung eines erhöhten Antriebsdrehmoments über ein Gaspedal (174), während gleichzeitig das Vorhandensein eines weiteren Sekundärfahrzeugs (178) vor dem Fahrzeug und das Sekundärfahrzeug (110) im toten Winkel (182) unter Verwendung der Sensoren des Hauptfahrzeugs detektiert werden, und
als Reaktion darauf, Anpassen (S108) des Fahrmodus (124) des Fahrzeugs durch den Verarbeitungsschaltkreis.

13. Verfahren nach Anspruch 10, das ferner Folgendes umfasst:
Erfassen (S110) von Navigationsdaten (128) durch den Verarbeitungsschaltkreis,
Bestimmen (S122) durch den Verarbeitungsschaltkreis anhand der Navigationsdaten, dass sich das Fahrzeug auf einer Zufahrtsspur (186) mit einer Länge unterhalb eines vorbestimmten Schwellenwerts (190) befindet,
Detektieren (S124) durch den Verarbeitungsschaltkreis, dass sich das Sekundärfahrzeug (110) auf der benachbarten Fahrspur (194) und hinter dem Hauptfahrzeug (104) und näher am Hauptfahrzeug als ein vorbestimmter Annäherungsschwellenwert (198) befindet,
als Reaktion darauf, Anpassen (S108) des Fahrmodus des Fahrzeugs durch den Verarbeitungsschaltkreis.

14. Computerprogrammprodukt (200), das Programmcode (202) zum Durchführen des Verfahrens nach einem der Ansprüche 10-13 umfasst, wenn dieser von einem Verarbeitungsschaltkreis ausgeführt wird.

15. Nichtflüchtiges, computerlesbares Speichermedium (206), das Anweisungen (210) umfasst, die, wenn sie von einem Verarbeitungsschaltkreis ausgeführt werden, den Verarbeitungsschaltkreis dazu veranlassen, das Verfahren nach einem der Ansprüche 10-13 durchzuführen.

## Revendications

1. Système informatique (100) comprenant un circuit de traitement (102) configuré pour :
détecter, à l'aide de capteurs (103) d'un véhicule hôte (104), une situation de trafic à forte accélération (106) impliquant un véhicule secondaire (110),
estimer une puissance requise (112) pour gérer la situation de trafic à forte accélération (106) à l'écart du véhicule secondaire (110) dans un laps de temps donné,
déterminer que la puissance requise (112) dépasse une puissance actuelle (116) disponible dans un mode ECO activé (120) du véhicule,
passer un mode de conduite (124) du véhicule du mode ECO (120) à un mode de puissance supérieure (126) fournissant une puissance de propulsion plus élevée que dans le mode ECO.

2. Système informatique selon la revendication 1, dans lequel le circuit de traitement est en outre configuré pour :
acquérir les données de navigation (128),
déterminer que le véhicule hôte (104) se trouve au niveau ou à proximité d'une section de route (132) qui nécessite le mode de puissance supérieure (126), et passer le mode de conduite (124) du véhicule du mode ECO au mode de puissance supérieure avant d'atteindre la section de route (132).

3. Système informatique selon la revendication 2, dans lequel la section de route (132) est déterminée comme nécessitant le mode de puissance supérieure (126) sur la base de données collectées antérieurement (136) indiquant que la section de route (116) a historiquement requis le mode de puissance supérieure, ou sur la base de caractéristiques de route (140) pouvant être extraites des données de navigation (128).

4. Système informatique selon l'une quelconque des revendications 1 à 3, dans lequel le circuit de traitement (102) est en outre configuré pour :
transmettre des données de navigation (129) qui indiquent une section de route nécessitant un passage au mode de puissance supérieure à d'autres véhicules (144) ou à un serveur (148).

5. Système informatique selon l'une quelconque des revendications 1 à 4, dans lequel le circuit de traitement (128) est en outre configuré pour :
maintenir le mode de puissance supérieure (126) jusqu'à ce que le véhicule ait géré la situation de trafic à forte accélération (106).

6. Système informatique selon l'une quelconque des revendications 1 à 5, dans lequel le passage du mode de conduite du mode ECO au mode de puissance supérieure comprend l'adaptation d'au moins une limite d'accélération (150), d'une limite de vitesse (154) et d'une stratégie de changement de vitesse (158).

7. Système informatique selon la revendication 1, dans lequel le circuit de traitement est en outre configuré pour :
détecter une activation de feux indicateurs de direction (162), du fait que le véhicule hôte franchit les marquages de voie (168), et une demande d'augmentation du couple de propulsion via une pédale d'accélération (174), tandis que, dans le même temps, la présence d'un autre véhicule secondaire (178) devant le véhicule et le véhicule secondaire (110) dans l'angle mort (182) sont détectés à l'aide des capteurs du véhicule hôte et,
en réponse, adapter le mode de conduite (124) du véhicule.

8. Système informatique selon la revendication 1, dans lequel le circuit de traitement est en outre configuré pour :
acquérir des données de navigation (128),
déterminer, à partir des données de navigation, que le véhicule se trouve sur une voie d'insertion (186) dont la longueur est inférieure à un seuil prédéterminé (190),
détecter que le véhicule secondaire (110) se trouve dans la voie adjacente (194) et derrière le véhicule hôte (104) et plus proche du véhicule hôte qu'un seuil de proximité prédéterminé (198),
en réponse, adapter le mode de conduite (124) du véhicule.

9. Véhicule (104) comprenant le système informatique (100) selon l'une quelconque des revendications 1 à 8.

10. Procédé mis en œuvre par ordinateur, comprenant :
la détection (S102), par un circuit de traitement (102) d'un système informatique, au moyen de capteurs (103) d'un véhicule hôte (104), d'une situation de trafic à forte accélération (106) impliquant un véhicule secondaire (110),
l'estimation (S104), par le circuit de traitement, d'une puissance requise (112) pour gérer la situation de trafic à forte accélération (106) à l'écart du véhicule secondaire (110) dans un laps de temps donné,
la détermination (S106), par le circuit de traitement, que la puissance requise (112) dépasse une puissance actuelle (116) disponible dans un mode ECO activé (120) du véhicule,
le passage (S108), par le circuit de traitement, d'un mode de conduite (124) du véhicule du mode ECO (120) à un mode de puissance supérieure (126) fournissant une puissance de propulsion supérieure à celle du mode ECO.

11. Procédé selon la revendication 10, comprenant en outre :
l'envoi (S117), par le circuit d'un message sur une interface utilisateur dans le véhicule indiquant que ECO est temporairement désactivé.

12. Procédé selon la revendication 10, comprenant en outre :
la détection (S120), par le circuit de traitement, d'une activation de voyants indicateurs de direction (162), du fait que le véhicule hôte franchit les marquages de voie (168), et d'une demande d'augmentation du couple de propulsion via une pédale d'accélération (174), tandis que, dans le même temps, la présence d'un autre véhicule secondaire (178) devant le véhicule et du véhicule secondaire (110) dans l'angle mort (182) sont détectées au moyen des capteurs du véhicule hôte, et
en réponse, l'adaptation (S108), par le circuit de traitement, du mode de conduite (124) du véhicule.

13. Procédé selon la revendication 10, comprenant en outre :
l'acquisition (S110), par le circuit de traitement, de données de navigation (128),
la détermination (S122), à l'aide du circuit de traitement, à partir des données de navigation, que le véhicule se trouve sur une voie d'insertion (186) dont la longueur est inférieure à un seuil prédéterminé (190),
la détection (S124), par le circuit de traitement, que le véhicule secondaire (110) se trouve dans la voie adjacente (194) et derrière le véhicule hôte (104) et plus proche du véhicule hôte qu'un seuil de proximité prédéterminé (198),
en réponse, l'adaptation (S108), par le circuit de traitement, du mode de conduite du véhicule.

14. Produit de programme informatique (200) comprenant un code de programme (202) pour exécuter, lorsqu'il est exécuté par un circuit de traitement, le procédé selon l'une quelconque des revendications 10 à 13.

15. Support de stockage non transitoire lisible par ordinateur (206) comprenant des instructions (210) qui, lorsqu'elles sont exécutées par un circuit de traitement, amènent le circuit de traitement à exécuter le procédé selon l'une quelconque des revendications 10 à 13.
